(19) Europäisches Patentamt
European Patent Office
Office européen des brevets

(11) EP 2 388 745 A1

(12) EUROPEAN PATENT APPLICATION
published in accordance with Art. 153(4) EPC

(43) Date of publication:
23.11.2011 Bulletin 2011/47

(51) Int Cl.:
G06Q 30/00 (2006.01)

(21) Application number: 09843372.5

(86) International application number:
PCT/KR2009/001885

(22) Date of filing: 13.04.2009

(87) International publication number:
WO 2010/119996 (21.10.2010 Gazette 2010/42)

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: Enswers Co., Ltd.
Seoul 135-978 (KR)

(72) Inventors:
• KIM, Kil-Youn
Seoul 121-230 (KR)

• PARK, Dae-Bong
Seoul 150-103 (KR)

(74) Representative: Beck & Rössig
European Patent Attorneys
Cuvilliésstraße 14
81679 München (DE)

(54) **METHOD AND APPARATUS FOR PROVIDING MOVING IMAGE ADVERTISEMENTS**

(57) Disclosed is a method and apparatus for providing moving image advertisements. The present invention provides a method and apparatus for providing moving image advertisements, which comprises the steps of: receiving a search request from an advertiser's terminal; providing said advertiser's terminal with a moving image search list matching said search request; obtaining advertisement setup information from said advertiser's terminal for the first moving image which is included in said moving image list provided; setting up said first moving image advertisement which matches said obtained advertisement setup information; and setting up a second moving image advertisement which shares the same display area with said first moving image which matches said obtained advertisement setup information for said first moving image. Accordingly, the present invention provides a method and an apparatus for moving image advertisements with a high matching efficiency using the first moving image advertisement to set the second moving image advertisement which shares the same display area.

FIG. 3

**Description**

**Technical Field**

The present invention relates to a method and apparatus for providing video-related advertisements.

**Background Art**

Among various Internet business models that have been verified as being operated effectively, the most important model is an advertisement provision model One of the advertising models implemented on the Internet at early stage is a banner advertisement provision model. The banner advertisements that are exposed to persons can be designated by advertisers. Such a banner advertisement may include a hyperlink for allowing users to refer to more detailed information about the banner advertisement. The detailed information about the banner advertisement may be provided in the form of a web page by which a product or a service being advertised may be purchased.

In a banner advertisement provision model, advertising execution costs can be set in advance depending on the location at which a relevant advertisement is exposed. Further, a banner advertisement budget can be consumed in proportion to the number of exposures of the banner advertisement.

A further developed advertising model adopts a method of determining advertising execution costs in proportion to the reactions of persons to a relevant advertisement provided on a web page. The reactions of users to an advertisement include the action of clicking the advertisement.

Persons reacting to the advertisement have the high probability of purchasing a product or service being advertised. When an advertiser selects the payment of advertising execution costs proportional to the number of reactions to the advertisement, he can pay the advertising execution costs only to the advertisements related with users who show an interest in the product or service of the advertiser. Such an advertising model is referred to as a Pay-Per-Click (PPC) model. An advertising platform in which such a PPC model is operated has been provided by Overture Services inc., Google inc., etc.

Since advertising execution costs in a PPC model are proportional to the reactions of persons to advertisement content provided, an advertising platform operator adopts various techniques for inducing more reactions. For example, search service providing websites employing PPC models provide advertisements having keywords that match query words entered by a user, thus inducing more reactions of users. An advertiser can set keywords for his or her advertisements in advance, but only entering the keywords is not sufficient to target customers to whom the advertisement is to be provided.

**Disclosure**

**Technical Problem**

An aspect of the present invention is to provide a method and apparatus for providing video-related advertisements.

**Technical Solution**

In accordance with an aspect of the present invention, there is provided a method of providing video-related advertisements, including receiving a search request from an advertiser terminal; providing a video search list corresponding to the search request to the advertiser terminal; obtaining advertisement setting information related to a first video, included in the provided video search list, from the advertiser terminal; setting an advertisement for the first video depending on the obtained advertisement setting information; and setting an advertisement for a second video, which shares an identical section with the first video, depending on the obtained advertisement setting information related to the first video.

The video-related advertisement provision method may further include forming a video cluster that includes the first video and the second video by assigning a common cluster identifier to the two videos sharing the identical section, wherein the setting the advertisement for the second video may be performed by setting an advertisement for the formed video cluster depending on the advertisement setting information related to the first video.

In the video-related advertisement provision method, the forming the video cluster that includes the first video and the second video by assigning the common cluster identifier to the two videos sharing the identical section may include generating frame feature vectors for the two videos, respectively; and comparing the frame feature vectors of the two videos with each other, thus detecting the identical section shared between the first video and the second video.

In the forming the video cluster, the generating the frame feature vectors may include respectively calculating color distribution vectors for a plurality of sub-frames, formed by dividing a frame of each video; generating first differences between the color distribution vectors of the frame using the color distribution vectors; generating second differences between the color distribution vectors using the first differences between the color distribution vectors; and generating a frame feature vector of the frame based on the color distribution vectors, the first differences between the color distribution vectors, and the second differences between the color distribution vectors. In this way, the frame feature vectors are used, so that time required for comparison between the videos can be reduced compared to the case where pieces of binary data of the videos are compared.

Meanwhile, the video-related advertisement provision method according to an embodiment of the present invention may set an advertisement for a third video, which shares an identical section with the second video, as well as the second video which shares the identical section with the first video depending on the advertisement setting information related to the first video.

For the setting of the advertisement for the third video in this way, the video-related advertisement provision method may further include forming a video cluster, which includes the first video and the second video, by assigning a common cluster identifier to the two videos sharing the identical section. The setting the advertisement for the third video may be performed by setting an advertisement for the formed video cluster depending on the advertisement setting information related to the first video.

According to an embodiment of the present invention, there is provided a method of providing video-related advertisements, the method being performed to match advertisements wih videos belonging to a video cluster that is formed by assigning a common cluster identifier to two videos sharing an identical section, including obtaining keyword information about a first video belonging to the video cluster; detecting a first advertisement matching the first video based on both the keyword information about the first video and advertisement keywords; and matching the detected first advertisement with a second video, which belongs to the video cluster and shares an identical section with the first video.

In this case, the video-related advertisement provision method may further include matching the detected first advertisement with a third video, which belongs to the video cluster and does not share an identical section with the first video. In this way, a related advertisement can be set even for the third video belonging to the same video cluster as that of the first video even if the third video does not directly share an identical section with the first video.

The method of providing video-related advertisements according to an embodiment of the present invention may be executed by a computer, and a program for executing the method on the computer may be recorded on a computer-readable recording medium.

In accordance with another aspect of the present invention, there is provided an apparatus for providing video-related advertisements, including a video search request reception unit for receiving a search request from an advertiser terminal; a video list provision unit for providing a video search list corresponding to the search request to the advertiser terminal; and an advertisement setting management unit for setting an advertisement for a first video, which is included in the provided video list, depending on advertisement setting information which is related to the first video and is obtained from the advertiser terminal, and setting an advertisement for a second video which shares an identical section with the first video, depending on the obtained advertisement setting information related to the first video.

The above and other aspects, features and advantages of the present invention will be more clearly understood from the accompanying drawings, claims and detailed description of the invention.

**Description of Drawings**

Fig. 1 is a diagram illustrating a web page on which a video and a video-related advertisement are provided according to an embodiment of the present invention;

Fig. 2 is a diagram illustrating a matching relationship between a video and an advertisement according to an embodiment of the present invention;

Fig. 3 is a diagram illustrating an environment in which an advertisement provision method is implemented according to an embodiment of the present invention;

Fig. 4 is a configuration diagram showing a video clustering system according to an embodiment of the present invention;

Fig. 5 is a configuration diagram showing an advertising agency system according to an embodiment of the present invention;

Fig. 6 is a flowchart showing a method of providing video advertisements according to an embodiment of the present invention;

Fig. 7 is a flowchart showing a video clustering method according to an embodiment of the present invention;

Fig. 8 is a diagram illustrating a video frame and sub-frames according to an embodiment of the present invention;

Fig. 9 is a diagram illustrating a relationship among color distribution vectors, first differences between the color distribution vectors, and a second difference between the color distribution vectors according to an embodiment of the present invention;

Fig. 10 is a diagram illustrating color distribution vectors, first differences between the color distribution vectors, second differences between the color distribution vectors, and a feature vector obtained therefrom according to an embodiment of the present invention; and

Fig. 11 is a diagram illustrating a video segment comparison procedure according to an embodiment of the present invention.

**Best Mode**

Hereinafter, embodiments of a method and apparatus for providing video-related advertisements according to the present invention will be described in detail with reference to the attached drawings. However, it should be understood that those embodiments are not intended to limit the present invention to specific embodied forms and they include all changes, equivalents or substitutions included in the spirit and scope of the present invention. If in the specification, detailed descriptions of well-known technologies may unnecessarily make the gist of the present invention obscure, the detailed descriptions will be omitted. Further, when a description is conducted with reference to the attached drawings, the same reference numerals are used to designate the same or similar components, and repeated descriptions thereof will be omitted here.

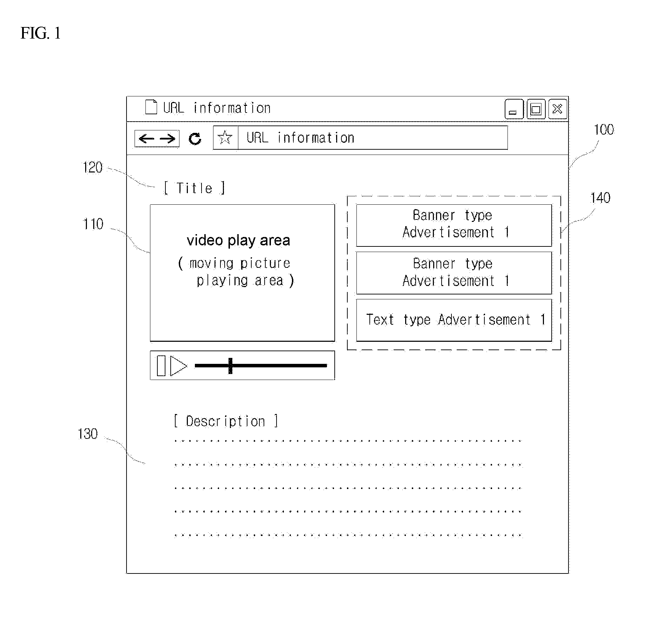

Fig. 1 is a diagram illustrating a web page on which a video (moving picture) and a video-related advertisement are provided according to an embodiment of the present invention.

Referring to Fig. 1, a web page displayed on a web browser program window 100 includes a video play area (moving picture playing area) 110. Various types of videos (content), such as a news report, a music video, a movie, a documentary, and User Created Content (UCC), can be provided in the video play ana 110.

Further, title information 120 and description information 130 related to the video can be provided together with the video. For example, in the case of a news report video, the title information may be the headline text of a news item, and the description information 130 may be the text of the body of the news item. As another example, when a video (content) provided in the video play area is a music video, the title information may include the title of a song and/or the name of a singer, and the description information 130 may include information about the words of the music video.

In an embodiment of the present invention, a video (content) may be provided together with a video-related advertisement. An advertisement provided on separate advertisement provision area 140 can be exposed at the same time that the video is played in the video play area 110. Meanwhile, the advertisement may be provided in the video play area 110. Generally, the advertisement in the video play area 110 is exposed before or after the video is played, but it is also possible to provide a video-related advertisement overlapped to the video being played. In this way, a video-related advertisement, that is, a video targeting advertisement provided according to an embodiment of the present invention, can be provided in the form of pre-roll, post-roll and overlay advertisements in which an advertisement appears before, after, and while a video is played, respectively. The video-related advertisement can be made to match a relevant video using metadata collected during a procedure for clustering the video accompanied by the advertisement.

Advertisements to be provided can be represented in various forms including flash-based animation, text and videos. The advertisements to be provided may include hyperlinks for referring to other web pages which provide detailed information about the advertisements. The advertisements that are provided can be operated by Pay-Per-View (PPV) models and/or Pay-Per-Click (PPC) models. The reactions of the users to the advertisements can be collected by the server of an advertising agency and can be used to calculate advertising execution costs.

Meanwhile, video-related advertisements according to an embodiment of the present invention are not necessarily provided via the same browser window on which a video is provided, as shown in Fig. 1. That is, the video-related advertisements can be provided via either a separate browser window or a client program.

Items related to the representation forms of advertisements, the implementation of hyperlinks included in advertisements, and advertising cost execution models can be easily understood by those skilled in the art to which the present invention pertains (hereinafter referred to as "those skilled in the art"), and thus a repeated description thereof will be omitted.

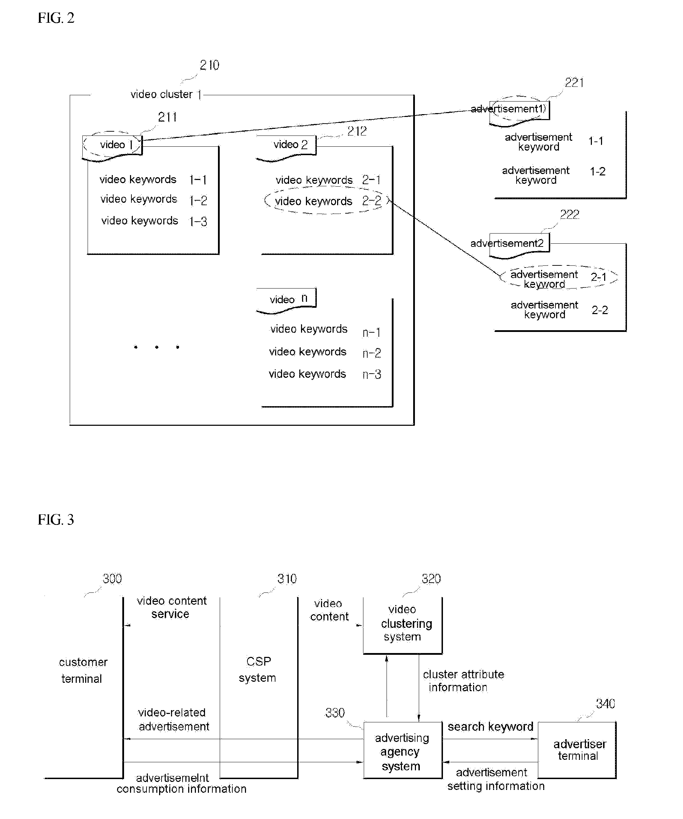

Meanwhile, an advertisement provided together with a video on a web page can attract more users' reactions to the advertisement as the advertisement is better correlated to the video. Therefore, which advertisement is to be provided with respect to any video (content) provided on the web page is a factor greatly influencing the efficiency of the advertisement. However, it is not efficient for an advertiser to check the contents of all videos and separately designate advertisements suitable for the videos in order to improve the efficiency of advertisements. In the video-related advertisement provision method according to an embodiment of the present invention, when any video is provided to a customer terminal, an advertisement matching a video cluster to which the video belongs is provided, thus overcoming such inefficiency. Hereinafter, a matching relationship between a video cluster and advertisements according to an embodiment of the present invention will be described in detail with reference to Fig. 2.

Fig. 2 is a diagram illustrating matching relationships between videos and advertisements according to an embodiment of the present invention. Referring to Fig. 2, matching relationships between a first video cluster 210 and a first advertisement 221 and a second advertisement 222 is illustrated. Here, the first video cluster 210 includes a plurality of videos and the first advertisement 221 and the second advertisement 222 are related to the videos belonging to the video cluster 10.

The first video cluster 210 includes a first video 211, a second video 212, ..., and an n-th video. The first advertisement 221 and the second advertisement 222 directly match the first video 211 and the second video 212, respectively. The matching relationships between the videos and the advertisements can be formed based on a plurality of criteria.

For example, when a keyword for any video is identical to a keyword for any advertisement, a matching relationship between the video and the advertisement can be established. Further, the matching relationship between the video and the advertisement can be directly established by an advertiser or the advertiser's agent. Although the first advertisement 221 and the first video 211 do not have shared keywords, a matching relationship therebetween is established. A matching relationship between the second video 212 and the second advertisement 222 can be established by the identity or similarity between a video keyword 2-2 and an advertisement keyword 2-1.

Video keywords may include the title of a video, words extracted from the description information of the video, and tag information related to the video. The additional information of the video, such as the title information 120 and the description information 130 shown in Fig. 1, can be used to determine video-related advertisements.

Advertisement keywords may indicate information about a product/service which is to be advertised. The name of a product and the manufacturing company of a product to be advertised, the name of an advertising model, a selling place, etc. can be included in the advertisement keywords. Further, the advertisement keywords may be keywords which are to be bid upon in a typical competitive bid method.

In the advertisement provision method according to an embodiment of the present invention, when a matching relationship between any advertisement and any video is established, it can be extended to a matching relationship between the advertisement and a video cluster to which the video belongs. The first advertisement 221 matching (related to) the first video 211 also matches the first video cluster 210 to which the first video 211 belongs. Thus, the first advertisement 221 can be provided to be accompanied by another video belonging to the first video cluster 210.

The provision of advertisements based on the extension of matching relationships as above may be reasonable when any correlation is present between videos belonging to a video cluster. When two videos belonging to a video cluster are related to each other, it is expected that the interest of a customer who is provided with content for any one video and the interest of a customer who is provided with content for the other video will also be similar to each other. Therefore, if an advertisement matching a video and is expected to be attractive to a customer for the video is provided as an advertisement in relation with other videos, it will be one method of improving advertising efficiency.

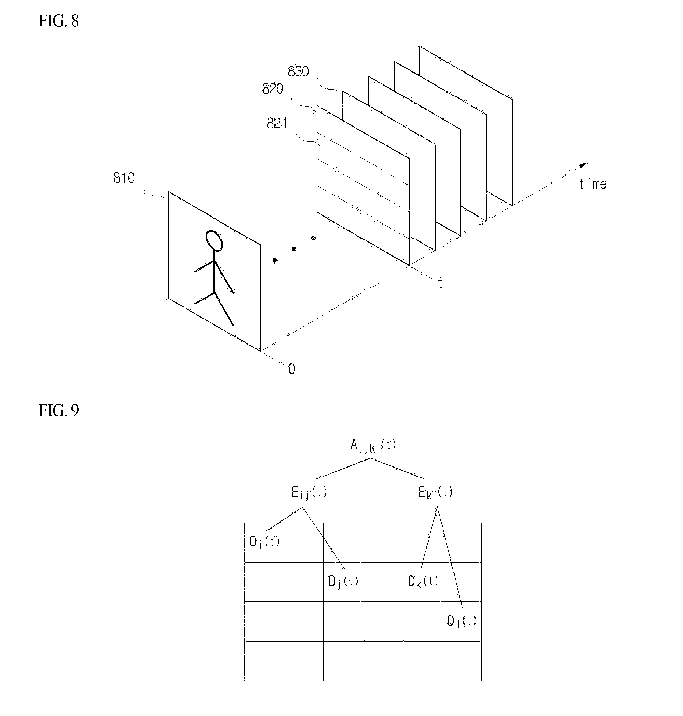

A correlation between videos belonging to a single video cluster may be acquired during a procedure for forming the video cluster. In the video-related advertisement provision method according to an embodiment of the present invention, a video cluster can be formed by repeating a procedure for including two videos, having the same image information, into a single video cluster. By matching the same advertisement with such a video cluster, the efficiency of the video-related advertisement provision method can be increased. A method of determining whether the same image information is included, that is, a criterion for the formation of a video cluster, will be described in detail with reference to Figs. 8 to 11.

The matching and provision of advertisements in relation with a video cluster are advantageous compared to the matching and provision of advertisements with individual videos. In the matching of advertisements with individual videos, it is impossible for an advertiser to separately set advertisements for all videos respectively. Thus, advertisement matching based on keywords or the like is performed. However, when an advertisement is matched with a video, the contents of which have not been directly verified, using a keyword only, unsuitable matching may occur. For example, when advertisement matching is performed using the determination of whether an advertisement keyword entered by an advertiser is identical to the title of a video, which is a representative example of a video keyword, an undesirable advertisement may match a video having an ironical or satirical title.

If an advertisement is set(matched) to a video cluster, the advertisement set to the video cluster can be provided with respect to newly collected video which is determined to be included in the video cluster. Thus, according to the matching procedure and provision of advertisement based on video cluster, even in the case where new videos are collected and included in a video cluster, the procedure of determining which advertisement is to be set to the new video by an advertise or advertiser's agent may be omitted

In the video-related advertisement provision method according to an embodiment of the present invention, advertisements matching a video cluster may be provided for all videos videos belonging to the video cluster. Thus, when a content service related to videos belonging to the first video cluster 210 is provided, the first advertisement 221 and the second advertisement 222 may also be transmitted to user terminals provided with the content service.

Such an advertisement provision method has the effect of extending the coverage of advertisement matching. That is, even if the first video 211 does not have a direct correlation with the second advertisement 222 (for example, when having the same keyword or the like), indirect matching between the first video and the second advertisement can be realized based on a matching relationship between the second video 212, which is another video belonging to the same video cluster, and the second advertisement 222.

Such extension of matching relationships can be more efficiently performed when a close correlation is present between the first video 211 and the second video 212. For example, extending the matching relationships between videos containing similar contents, between videos having a similar theme, and between videos created by the same creator, may be a reasonable selection. The most conservative criterion may be the extension of a matching relationship when two videos are completely identical duplicates. A criterion which is less strict than the above criterion is when two videos have identity in part, that is, that the two videos overlap partly each other. The determination of the identity in part of two videos, that is, the determination of whether the videos share an identical section partly, will be described later with reference to other drawings.

Meanwhile, matching between videos and advertisements based on advertisement keywords and video keywords can be performed at the direct advertisement setting request of an advertiser or an agent. The advertiser can check candidate videos for which his or her advertisement is to be provided and can designate a suitable one among the presented candidate videos. According to this method, even if a correlation between an advertisement keyword and a video keyword is low, matching with advertisements can be performed. For example, when a keyword for a video does not desirably reflect the contents and theme of the video, advertisement matching can be performed using the above method even if only meaningless text is collected as video keywords, and an established matching relationship can be extended, as described above.

The establishment of matching relationships between videos and advertisements can be individually performed based on commands issued by the advertiser terminal, or, alternatively, can be simultaneously performed using an automated program for previously collected advertisement groups and previously collected video group. During this process, a procedure for determining identity or similarity between a video keyword and an advertisement keyword can be performed.

Fig. 3 is a diagram illustrating an environment in which the advertisement provision method is implemented according to an embodiment of the present invention.

Referring to Fig. 3, a customer terminal 300, a content service provider (CSP) system 310, a video clustering system 320, an advertising agency system 330, and an advertiser terminal 340 are illustrated

The customer terminal 300 is the terminal of a user who accesses the content service provider system 310 (hereinafter referred to as a 'CSP system') and uses (consumes) a content service. In an embodiment of the present invention, the content service is related to videos, and advertisements related to the videos can be provided to the customer terminal 300. The illustration of a screen for the content service related to videos and the provision of advertisements on the customer terminal 300 was described with reference to Fig. 1.

The CSP system 310 is a server for providing the content service to the customer terminal 300. In an embodiment of the present invention, the CSP system 310 provides video-related services. Services such as the searching, playing and storage of videos can be provided by the CSP system 310.

Services, such as blog hosting services for posting contents including videos and YouTube service on which videos created by users are shared and consumed, are examples of the content service provided by the CSP system 310. News provision services including videos may also be an example of a video content service provided by the CSP system 310.

Video content provided by the CSP system 310 may be collected by the video clustering system 320 ani may then undergo a clustering procedure. The advertising agency system 330 can set advertisements for clusters generated by the video clustering system 320.

When a user accesses the CSP system 310 using the customer terminal 300, the advertising agency system 330 receives an advertisement request signal corresponding to the user's access to the CSP system 310. The advertisement request signal transmitted to the advertising agency system 330 can be transferred during a procedure in which the web browser program of the customer terminal 300 reads a web document on the CSP system 310. The advertisement request signal can be generated according to code executed by the web browser program, and can also be transferred based on separate rules between the CSP system 310 and the advertising agency system 330. The advertisement request signal may include information required to identify videos that are provided to the customer terminal 300 as part or all of content services.

The advertising agency system 330 may determine advertisements to be provided to the customer terminal 300 with reference to such identification information. The determined advertisements can be provided to the customer terminal 300 either indirectly via the CSP system 310 or directly via the advertising agency system 330.

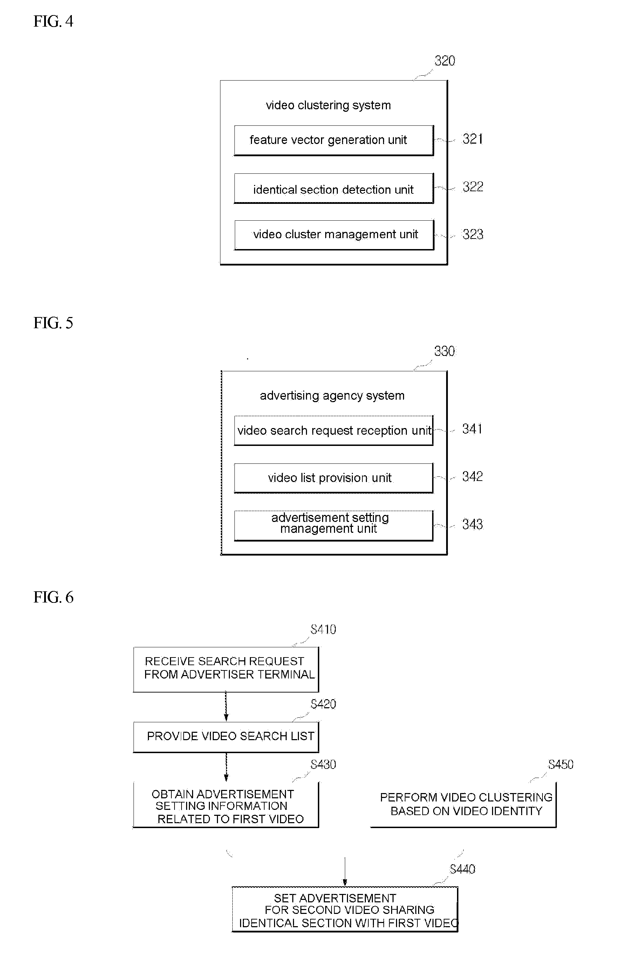

The video clustering system 320 functions to collect information about videos and classify the videos into clusters. Referring to Fig. 4, the video clustering system 320 according to an embodiment of the present invention includes a feature vector generation unit 321, an identical section detection unit 322, and a video cluster management unit 323.

The video clustering system 320 may perform clustering on videos on the basis of the identity between the videos. In an embodiment of the present invention, when any two videos share at least an identical section, it can be said that identity is present between the videos. In the present invention, it should be understood that the shared identical section does not mean only that its binary data is completely same.

The feature vector generation unit 321 reads target video to be processed, divides the video into frames, observes the frames, and generates feature vectors for the respective frames. The feature vector generation unit 321 of the video clustering system 320 can extract feature vectors representing each frames based on the color distribution information of still images displayed in the form of frames during a video play procedure. In this procedure, each of the frames may be analyzed with being divided into a plurality of sub-frames. The color distribution vectors of each sub-frames can be obtained from color vectors of pixels belonging to each sub-frames, and components constituting the feature vectors may be calculated using first differences and second differences of the obtained color distribution vectors.

The identical section detection unit 322 compares the videos and checks identical sections between target videos. This procedure for checking the identical section between the videos can be performed by comparing the feature vectors of the videos. During this procedure, video segment-based comparison is primarily performed, and a possibility that an identical section will be present between the comparison target videosis searched for based on the video segment-based comparison. Such a possibility can be represented by an identity evaluation value that has been digitized by comparing segments.

The video cluster management unit 323 functions to group videos sharing an identical section into a single cluster. The clustering of videos is performed by assigning the same cluster identifier to the videos sharing the identical section. In this procedure, if video cluster identifier for a video is changed, changed video cluster identifier can be assigned to all other videos having had the same cluster identifier as the video for which video cluster identifier has been changed Further, a procedure for detecting an identical section between videos sharing a text token and clustering the videos can be primarily performed.

Meanwhile, the video clustering system 320 can collect pieces of metadata about target videos to be clustered These metadata may be transferred from the CSP system 310 based on separate communication protocols or may be collected using a typical web crawling technology. The pieces of collected metadata may be part or all of the information included in a web page on which the corresponding videos are provided, and may include the title information, description information, class information, etc. of the video. Such metadata may be used in a procedure for matching advertisements with videos. Also, as described above, metadata about a first video belonging to a cluster can be used in a procedure for matching an advertisement with a second video.

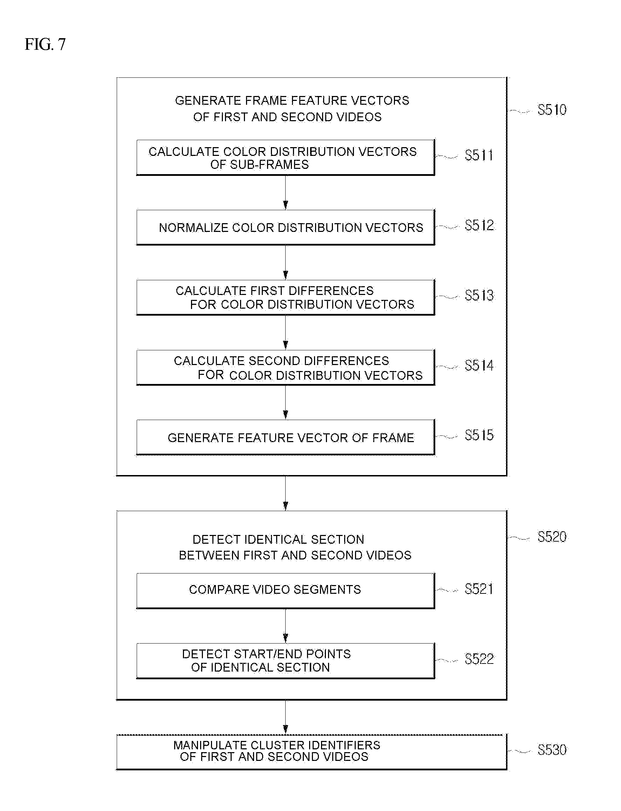

Flowcharts showing the detailed operations of the video clustering system 320 and the components thereof will be described in detail below with reference to Figs. 6 and 7.

The advertising agency system 330 is a system for operating adverting execution models. Referring to Fig. 5, the advertising agency system 330 may include a video search request reception unit 341, a video list provision unit 342, and an advertisement setting management unit 343.

The advertising agency system 330 may be operated based on Pay-Per-Click (PPC) and/or Pay-Per-View (PPV) models so as to establish advertising execution costs. The advertising agency system 330 can obtain information about clusters into which videos have been classified by exchanging information with the video clustering system 320. The advertising agency system 330 can establish matching relationships between advertisements and videos by comparing advertisement keywords with video keywords. These matching relationships can be managed by a database (DB) provided in the advertising agency system 330 or by a separate database.

The video search request reception unit 341 receives from the advertiser terminal a video search request for requesting information related to which videos are being provided to the customer terminal via the CSP system 310, that is, related to which videos are potential targets that can be accompanied by his advertisements.

The video search request can include search keywords. When a keyword for any video is matched to a search keyword, information about the video is transferred to the advertiser terminal 340 via the video list provision unit 342.

According to a reaction to the video search results provided in this way, the advertiser can transfer information related to which advertisement is to match a first video belonging to the search results, that is, advertisement setting information, to the advertising agency system. The advertisement setting management unit 343 can utilize this advertisement setting information for setting advertisements for a video cluster to which the first video belongs, and/or a second video belonging to the video cluster. The matching relationship between advertisements and videos and the matching relationship between advertisements and video clusters can be changed by altering information about the relationships between both the sides.

The operations of the advertising agency system 330 and the components thereof according to an embodiment of the present invention will be understood with reference to the flowchart of Fig. 6. Referring to Fig. 6, a video advertisement provision method according to one embodiment of the present invention may include the step S410 of receiving a search request from an advertiser terminal, the step S420 of providing a video search list, the step S430 of obtaining advertisement setting information related to a first video, and the step S440 of setting an advertisement for a second video which shares an identical section with the first video. The above-described steps can be performed by the advertising agency system 330.

Meanwhile, the advertising agency system 330 can obtain advertisement consumption information so as to collect statistical data about advertising execution and to charge fees. The advertisement consumption information can be collected via direct communication between the customer terminal 300 and the advertising agency system 330 or can be collected by the CSP system 310 and can be transferred to the advertising agency system 330.

For example, in the case of a PPV model, an advertisement can be consumed in such a way that it is displayed on the customer terminal 300. When a click on an advertisement provided to the customer terminal 300 occurs in the PPC model, information about such a click action is transferred to the advertising agency system 330, and a budget assigned to the advertisement can be consumed based on the information (advertisement consumption information) about the click action taken.

In an embodiment of the present invention, in order to arouse more interest in a product/service which is to be advertised, an advertisement related to the video of a content service provided to the customer terminal 300 is provided.

Such a correlation between the advertisement and the video can be grasped based on relationships between advertisement keywords and video keywords. Therefore, the advertising agency system 330 compares keywords for videos collected and classified into video clusters with keywords for advertisements (for example, keywords which are the targets of bidding in the PPC model), thus determining whether a relevant advertisement can match a relevant video.

During this procedure, not only the comparison of individual videos, but also the matching of advertisements with video clusters can be performed. For example, in the case where a second video and a third video which share an identical section with a first video are present, and a shared identical section is not present between the second video and the third video, video keywords for the first video can be compared with advertisement keywords in advertisements matching procedure for the second video and the third video sharing the identical section with the first video respectively. Further, since the second video has a close correlation with the third video via the first video, the video keywords for the second video can be used compared with advertisement keywords in advertisement matching procedure for the third video which belongs to same video cluster with the second video, but does not share an identical section with the second video.

Meanwhile, in the description of the embodiments of the present invention, the fact that any system (server) provides any information can be interpreted as including not only a form in which the system stores the information therein and directly provides the information, but also a form in which the system relays information from another system.

For example, when the user terminal enters a Uniform Resource Locator (URL) belonging to a first server, and views a web page provided by the first server, the displayed web page can provide information that is provided by (other) a second server. Even in this case, the information can be understood as having been provided by the first server.

That is, in the case where a web page, viewed on the customer terminal 300 when the customer terminal 300 accesses the CSP system 310, provides an advertisement provided by the advertising agency server 330, the advertisement can be described as having been provided by the CSP system 310.

Fig. 7 is a flowchart showing a video clustering method according to an embodiment of the present invention. Referring to Fig. 7, the step S510 of generating the feature vectors of a first video and a second video and the step S520 of detecting an identical section between the two videos are performed Then the step S530 of manipulating the cluster identifiers of the videos is performed.

Hereinafter, the step S510 of generating frame feature vectors of the first video and the second video is divided into detailed steps and will be described. The step S511 of calculating color distribution vectors of subframes is for generating vectors representing the color distribution of sub-frames which is defined by divided frames of each video.

The examples of frames and sub-frames of a video according to an embodiment of the present invention can be understood with reference to Fig. 8.

A frame may refer to each of still images constituting a video. The frame may be used as a unit for editing a video. Generally, a video (moving pictures) can be encoded to have 24 to 30 frames per second, and a high-quality video can also be encoded to have 60 frames per second.

However, in embodiments of the present invention, frames from which feature vectors are extracted for comparing videos with each other do not need to maintain the frame per second at which the video is encoded, and the time interval between frames is not necessarily maintained at a uniform interval.

A first frame 810 illustrated in Fig. 8 is the first frame of a video. In one video, a time axis can be defined such that the start point of the video is set to the origin, as shown in Fig. 8. The first frame can be understood to be a still image represented at the start point (t=0) of the time axis of the video.

A second frame 820 and a third frame 830 are two frames adjacent to each other. The time interval between the two adjacent frames can be calculated as the reciprocal of the frame per second at which the frames are defined. Further, frames from which the feature vectors are extracted for comparing two videos can be defined using other number of frames per second, with the other number of frames being independent of the frame per second at which the two videos are encoded.

Referring to Fig. 8, the second frame 820 is divided in the form of a 4×4 structure, and a first sub-frame 821 is one of 16 sub-frames formed by dividing the second frame. In the present embodiment, the feature vector of the frame originates from the color distribution information of the sub-frames.

A color distribution vector is a vector representing the color distribution information of each sub-frame. The information contained in each sub-frame can be represented by the color vectors of respective pixels belonging to the sub-frame. The information of the sub-frames can be represented by a vector representing the color distribution in each sub-frame.

In the present embodiment, a single video frame is divided in the form of an n×n structure and has $n^2$ sub-frames. However, a single frame is not necessarily divided in the form of the n×n structure, and can be divided in the form of an m×n structure (where n and m are natural numbers which are different from each other).

A representative method of calculating a color distribution vector is to obtain the mean vector of color vectors of the pixels included in each sub-frame. In this case, a color distribution vector belonging to sub-frames of a frame can be represented by the following Equation:

Equation 1

$$D_i(t) = [\ R_i(t),\ G_i(t),\ B_i(t)\ ]$$

where t denotes a time variable for indicating the location of a frame on a time axis on which the start point of the video is the origin, i denotes the index of each sub-frames in the frame (i =1,2, ..., $n^2$), and $R_i(t)$, $G_i(t)$ and $B_i(t)$ respectively denote the mean values of red, green and blue components in each sub-frame i.

The above-described color distribution vector is a value represented in an RGB color coordinate system. However, various color coordinate systems such as YUV (luminance/chrominance) and CYMK (cyan, magenta, yellow, and key) color systems can be used to represent the color vectors of the pixels of each sub-frame. Accordingly, the color distribution vector of each sub-frame can also be represented using the same coordinate system as the coordinate system in which the color vectors of the pixels are represented. Further, it is apparent that vectors represented in any one color coordinate system can be converted into those of another color coordinate system and can be represented thereby.

The step S512 of normalizing the color distribution vector $D_i(t)$ obtained in this way may be additionally performed. There can be used a method of obtaining a mean value of color distribution vectors belonging to a predetermined time interval that includes time t on the time axis (for example, an interval from t-ε to t+ε or the like) and dividing $D_i(t)$ by the mean value. Further, there can also be used a method of obtaining a minimum value of the color distribution vectors during a predetermined time interval and subtracting the minimum value from $D_i(t)$.

Although, in the embodiment of the present invention, the procedure for normalizing color distribution vectors using the minimum value and the mean value of the color distribution vectors of a plurality of sub-frames corresponding to the same area within a video has been exemplified, the above-described normalization method is not necessarily the only one available.

The step S513 of calculating first differences for the color distribution vectors is the step of calculating first difference for color distribution vectors, defined as a difference between the color distribution vector of any one sub-frame and the color distribution vector of another sub-frame.

However, the first difference does not necessarily denote only a vector having the same dimension as that of the color distribution vectors, and may be a scalar value calculated as a difference between one component of any color distribution vector and one component of another color distribution vector corresponding thereto. Such discussion is also equally applied to a second difference.

The first difference $E_{ij}(t)$ for the color distribution vectors can be calculated by the following Equation, where $E_{ij}(t)$ denotes a difference vector,

Equation 2

$$E_{ij}(t) = D_i(t) - D_j(t)$$

where t denotes a time variable for indicating the location of a frame on a time axis on which the start point of the video is the origin, and i and j denote the indices of sub-frames (i and j = 1, 2, ..., $n^2$, where n is any natural number). In the present embodiment, $D_i(t)$ and $D_j(t)$ are three-dimensional (3D) vectors represented in an RGB color coordinate system, so that the first difference $E_{ij}(t)$ between the color distribution vectors can also be represented in the form of a 3D vector.

The step 5514 of calculating second differences for the color distribution vectors is the step of calculating second difference for the color distribution vectors, defined as a difference between the first difference of the color distribution vectors of a sub-frame and another first difference of the color distribution vectors of the sub-frame.

Similarly to the above description related to the first difference, the second difference does not necessarily denote a vector. The second difference is calculated as a difference between one first difference and another first difference. It does not necessarily mean that the second difference has the same dimension as that of the color distribution vectors or of the first differences.

The second difference $A_{ijkl}(t)$ for the color distribution vectors can be calculated by the following Equation:

Equation 3

$$A_{ijkl}(t) = E_{ij}(t) - E_{kl}(t)$$

Where $t$ denotes a time variable for indicating the location of a frame on a time axis on which the start point of the video is the origin, and $i, j, k$ and $l$ denote the indices of sub-frames (where $i, j, k$ and $l$= 1, 2, ..., $n^2$). Meanwhile, the relationships between the color distribution vectors, the first differences for the color distribution vectors, and the second differences for the color distribution vectors according to an embodiment of the present invention can be more clearly understood with reference to Fig. 9.

The step S515 of generating the feature vector of the frame is the step for generating the feature vector of a frame using the results of the vector calculation steps S511, S512, S513, and S514 that have been previously performed.

In the present embodiment, the color distribution characteristics of sub-frames are calculated from the color vectors of pixels in the sub-frames represented in the RGB color coordinate system (three dimensions: 3D), and the color distribution vectors of the sub-frames, the first differences for the color distribution vectors, and the second differences for the color distribution vectors are 3 dimensional vectors. The dimension of these vectors is subjected to the dimension of the coordinate system in which the color distribution characteristics of the subframes are represented.

The color distribution vectors, the first differences for the color distribution vectors, and the second differences for the color distribution vectors are vectors representing information represented on a single frame. Therefore, a feature vector representing the information represented on the frame can be generated by selecting several components from the components of these vectors.

In this procedure, the feature vector can be configured by selecting one or more components from a set which consists of the components of the color distribution vectors, the first differences for the color distribution vectors, and the second differences for the color distribution vectors. When h (h is any natural number) components are selected from those vectors, the feature vector of the frame will be an dimensional vector. The dimension of the feature vector can be changed for the sake of precision and promptness when comparing videos.

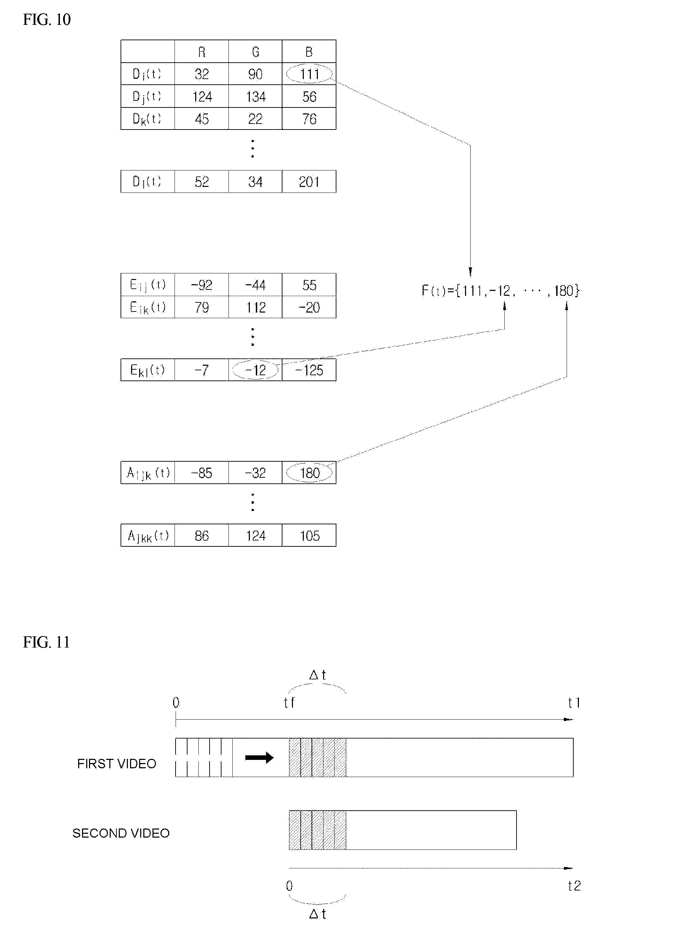

Meanwhile, one example of a procedure for generating the feature vector from those vectors can be understood with reference to Fig. 10. In Fig. 10, one or more components were respectively selected from the color distribution vectors of sub-frames, the first differences for the color distribution vectors, and the second differences for the color distribution vectors. One or more components are not necessarily selected respectively from the above-described three types of vectors (the color distribution vectors of sub-frames, the first differences for the color distribution vectors, and the second differences for the color distribution vectors). Any one or more types of vectors can be excluded from the three types of vectors in a selection procedure for configuring the feature vector.

This type of selection is not always the only method for generating a feature vector. An additional calculation procedure for generating a feature vector from the color distribution vectors of sub-frames, the first differences for the color distribution vectors, and the second differences for the color distribution vectors can be used.

The feature vector configured in this way can function as the fringerprint data of a frame. Inefficiency occurring in the procedure for determining identity or similarity between videos by comparing all pieces of information represented on the frame can be greatly reduced by using simplified feature vectors.

Higher-order feature vectors will require higher computing power, but they will provide more precise results of video comparison. Therefore, an effort to adjust the order of the feature vectors to a suitable level is required.

In Fig. 10, each first difference is a vector having the same dimension as that of the color distribution vectors, and each second difference is a vector also having the same dimension as that of the color distribution vectors. However, the first and second differences do not necessarily denote vectors, as described above. The first and second differences can be calculated based on only components necessary for the configuration of the frame feature vector among the color distribution vectors of the sub-frames. In this case, the first and second differences can also be calculated as either vectors having a dimension lower than that of the color distribution vectors or scalar values.

Meanwhile, the video data can be separated into audio data and video data. It is apparent that feature vectors can be extracted from both types of audio and video data and can be used as the basic data required for video clustering.

The step S520 of detecting an identical section between the first and second videos is the step of comparing the feature vectors of the videos, thus determining whether an identical section is present between the two videos.

The identical section detection step S520 may include a video segment comparison step 5521 and the identical section detailed information detection step S522. The video segment comparison step S521 is for comparing the two videos with each other on a segment basis, and then more promptly evaluating the probability of an identical section being present between the two videos and the identical section detailed information detection step S522 is for obtaining more precise information about the identical section (information about the start point and end point of the identical section in each of the videos) if it is determined that the probability of the two videos sharing the identical section is present.

The video segment comparison step S521 is the step of comparing a video segment in the first video with a video segment in the second video, thus measuring identity between the two segments.

The identity between the video segments can be evaluated based on the comparison of feature vectors which respectively belong to the video segments and which correspond to each other. The two corresponding feature vectors in first and second video segment frames are the feature vectors of frames which are located in the respective segments and have the same interval from the start times of respective video segments. The comparison of the feature vectors can be performed by calculating the distance between the feature vector of the first video segment and the feature vector of the second video segment corresponding thereto.

In an embodiment of the present invention, a feature vector may be an dimensional vector configured based on the color distribution vectors of the frame, the first differences for the color distribution vectors, and the second differences for the color distribution vectors, as described above. Assuming that a b-th component in the feature vector $F(t_1)$ of a frame, wherein the frame belongs to a first video segment and is located at the time after $t_1$ from the start point of the first video, is $F_b(t_1)$, and a b-th component in the feature vector $G(t_2)$ of a frame, wherein the frame belongs to a second video segment and is located at the time after $t_2$ from the start point of the second video, is $G_b(t_2)$, the distance $D(t_1,t_2)$ between the corresponding feature vectors can be defined by the L1 norm therebetween and can be calculated by the following Equation:

Equation 4

$$D(t_1, t_2) = \sum_{b=1}^{h} \left| F_b(t_1) - G_b(t_2) \right|$$

where b denotes the b-th component of a feature vector, and h denotes the dimension of the feature vector.

According to an embodiment of the present invention, the distance can be calculated for a plurality of feature vector pairs related to the first and second video segments. The video segment comparison step is configured to calculate an identity evaluation value between two video segments on the basis of the distances between the feature vectors. The sum, mean or the like of the distance of each feature vector pairs can be used as the identity evaluation value.

Meanwhile, the distance between the feature vectors is not necessarily defined by the L 1 norm. Either the L2 norm, or the L 1 norm, the maximum of which is limited, can be used to define the distance between the feature vectors. Further, it is possible that only when the L1 norm value satisfies a certain threshold value, the distance is set to a meaningful distance, otherwise the distance is set to '0' (for example, it is possible that when the L1 nom value is equal to or greater than the threshold value, the distance is set to '1', otherwise the distance is set to '0').

When the identity evaluation value calculated in this way satisfies a predefined thresholdvalue, it can be determined that the first and second video segments which are comparison targets are identical to each other. The threshold value that is a reference for determination can be determined by advance experimentation or the like based on a set of sample videos.

When the identity evaluation value calculated between the first and second video segments does not indicate that identity is present between the video segments, the comparison of video segments can be repeated while the start locations of video segments in the first and second videos are changed.

In this case, when the identity evaluation value indicates a remarkable difference between the two video segments, it is expected that the probability of detecting identity between video segments just adjacent to the video segments is also low. Therefore, in this case, it may be efficient to designate video segments, having a relatively large time interval with respect to a current comparison target video segment, as the comparison targets.

Therefore, when a time variable for designating a subsequent comparison target video segment in a repeated comparison procedure is changed, a variable width proportional to the difference between the identity evaluation value and the threshold to be satisfied so that the identity evaluation value indicates that identity is present between the video segments can be applied.

The video segment comparison procedure according to an embodiment of the present invention can be understood with reference to Fig. 11. The length of the video segments in the first video and the second video is $\Delta t$. The video segments are compared to one another while the start point of a first video segment is changed from the start point of the first video with the start point of a second video segment being fixed at the start point of the second video.

Referring to Fig. 11, when the start point of the first video segment is $t_f$, it is determined that the identity evaluation value between the segment of the first video and the comparison target segment of the second video indicates that identity is present between the two segments. However, since this shows the results of comparing only a relatively small number of frames of the video segments, it may be required that the identical section start/end point detection step S522 of detecting the exact start and end points of the identical section be performed.

In this way, the video segment comparison step using a lower frame per second is performed prior to the identical section start/end point detection step, thus reducing computing power required when a plurality of videos are compared.

Meanwhile, when the identity evaluation value indicates that identity is present between the two video segments, the identical section start/end point detection step S522 may be performed.

The step S522 of detecting the start point and end point of the identical section is a step for detecting the start point and the end point of the identical section in each of the first video and the second video when the identity evaluation value calculated at the video segment comparison step S521 indicates that identity is present between the two video segments.

As described above, in the step of detecting the start point and end point of the identical section, more number of frame per second than the number of frame per second in a video segment at the time of comparing video segments may applied to. This improves the precision with which the start and end points of the identical section are detected, and minimizes the consumption of computing powerin the video segment comparison step.

Referring to Fig. 11, since the identity with the second video is checked only when the start point of the video segment of the first video is $t_f$, searching for the identical section can be limited to the time after $t_f$. That is, in the identical section start/end point detection step, only frames located after time $t_f$ in the first video can be set to be compared to the frames of the second video.

For the sake of description, although Fig. 11 illustrates an overlapping form in which the start point of the second video corresponds to the center portion of the first video, the opposite form is also possible. In the case of opposite form, the above descriptions can be understood in the state in which the first video and the second video are exchanged.

The step S530 of manipulating the cluster identifiers of the first video and the second video is the step for assigning the same cluster identifier to the two videos sharing the identical section. In this procedure, the cluster identifiers of videos other than the first and second videos can also be changed.

For example, when cluster identifiers of the two videos sharing the identical section were different from each other and the cluster identifiers of the two videos are became to be identical, at least one of cluster identifier of the two videos should be changed. In this case, the identifier of the other videos having the previous cluster identifier before change are replaced by a new cluster identifier to be identical and thus clusters may be integrated.

When the videos compared are determined to be different from each other, it is also possible to form a new cluster by assigning a new cluster identifier to the video, to which no cluster identifier is assigned yet, of the two videos.

When a number of videos are present, the procedure of comparing all videos with each other and manipulating their cluster identifiers may be a highly consumptive operation. In order to minimize the consumption of computing power, various methods may be used. For example, a single cluster identifier is assigned to the videos which are completely identical to each other and only one of the videos is compared instead of comparing the other videos.

Further, an operation of primarily comparing videos having a higher possibility of being included h one cluster can also be useful to improve efficiency. For example, when a target video to be compared to one video (to detect an identical section) is selected, it may be efficient to set videos sharing a text token to videos having higher priority.

In an embodiment of the present invention, videos which are the targets of clustering are collected on the web, wherein text designated as the titles of the videos, text given in the description of the contents and theme of the videos, keywords entered by users to search for videos, information about the tags of blog posting in which the videos are included, etc. can be the text token of the videos.

Meanwhile, it is apparent that the above-described feature vector generation method is not necessarily performed for the clustering of the videos, and clustering can also be performed based on information that has been derived using a criterion differing from the above-described criterion and that indicates that two videos, that is, comparison targets, share an identical section.

The video-related advertisement provision method according to embodiments of the present invention may be implemented as digital code on a computer-readable recording medium. The computer-readable recording medium includes all types of recording devices in which data readable by a computer system is stored. The recording medium may be, for example, Read Only Memory (ROM), Random Access Memory (RAM), Compact Disc (CD)-ROM, a magnetic tape, a floppy disc, an optical data storage device, etc., and may also include a carrier wave form (for example, the case of being provided over the Internet).

The terms used in the present application are only intended to describe specific embodiments and are not intended to limit the present invention. The representation of a singular form includes a plural form unless it definitely indicates a different meaning in context.

It should be understood that in the present application, the terms "including" or "having" are only intended to indicate that features, numerals, steps, operations, components and parts described in the specification or combinations thereof are present, and are not intended to exclude in advance the possibility of the presence or addition of other features, numbers, steps, operations, components, parts or combinations thereof

The terms "first" and "second" can be used to describe various components, but those components should not be limited by the terms. The terms are used only to distinguish one component from other components.

Further, the representation "any information is acquired or transferred from any apparatus" is not interpreted as being limited to the case where the information is directly acquired from the apparatus without it having passed through any medium. The terms "acquisition", "transfer", and "transmission" can be interpreted as including an indirect form in which there are other types of intervening media,as well as a direct form.

Hereinbefore, the present invention has been described based on the embodiments thereof A plurality of embodiments other than the above embodiments are present in the claims of the present invention. Those skilled in the art will appreciate that the present invention can be implemented in modified forms without departing from the essential features of the invention. Therefore, the disclosed embodiments should be considered in a descriptive aspect rather than a restrictive aspect. The scope of the present invention is disclosed in the accompanying claims rather than the above-described description, and all differences within the equivalent scope of the claims should be interpreted as being included in the scope of the present invention.

### Industrial Applicability

According to embodiments of present invention, advertisement setting information related to a first video is used to set an advertisement for a second video having a section identical to that of the first video, thus enabling the provision of a video-related advertisement provision method and apparatus that improves the efficiency of advertisement matching.

According to embodiments of the present invention, an advertisement matching a first video also matches a second video that shares an identical section with the first video on the basis of text information related to the first video, thus enabling the provision of a video-related advertisement provision method and apparatus that improves the efficiency of advertisement matching.

### Claims

1. A method of providing video-related advertisements, comprising:

   receiving a search request from an advertiser terminal;
   providing a video search list corresponding to the search request to the advertiser terminal;
   obtaining advertisement setting information related to a first video, included in the provided video search list, from the advertiser terminal;
   setting an advertisement for the first video depending on the obtained advertisement setting information; and
   setting an advertisement for a second video, which shares an identical section with the first video, depending on the obtained advertisement setting information related to the first video.

2. The method according to claim 1, further comprising forming a video cluster that includes the first video and the second video by assigning a common cluster identifier to the two videos sharing the identical section, wherein the setting the advertisement for the second video is performed by setting an advertisement for the formed video cluster depending on the advertisement setting information related to the first video.

3. The method according to claim 2, wherein the forming the video cluster that includes the first video and the second video by assigning the common cluster identifier to the two videos sharing the identical section, comprises:

   generating frame feature vectors for the two videos, respectively; and

comparing the frame feature vectors of the two videos with each other, thus detecting the identical section shared between the first video and the second video.

4. The method according to claim 3, wherein the generating the frame feature vectors comprises:

calculating color distribution vectors for a plurality of sub-frames respectively, formed by dividing a frame of each video;
generating first differences for the color distribution vectors of the frame using the color distribution vectors;
generating second differences for the color distribution vectors using the first differences between the color distribution vectors; and
generating a frame feature vector of the frame based on the color distribution vectors, the first differences for the color distribution vectors, and the second differences for the color distribution vectors.

5. The method according to claim 1, further comprising setting an advertisement for a third video, which shares an identical section with the second video, depending on the advertisement setting information related to the first video.

6. The method according to claim 5, further comprising forming a video cluster, which includes the first video and the second video, by assigning a common cluster identifier to the two videos sharing the identical section,
wherein the setting the advertisement for the third video is performed by setting an advertisement for the formed video cluster depending on the advertisement setting information related to the first video.

7. A method of providing video-related advertisements, the method being performed to match advertisements with videos belonging to a video cluster that is formed by assigning a common cluster identifier to two videos sharing an identical section, comprising:

obtaining keyword information about a first video belonging to the video cluster;
detecting a first advertisement matching the first video based on both the keyword information about the first video and advertisement keywords; and
matching the detected first advertisement with a second video, which belongs to the video cluster and shares an identical section with the first video.

8. The method according to claim 7, further comprising matching the detected first advertisement with a third video, which belongs to the video cluster and does not share an identical section with the first video.

9. A computer-readable recording medium for storing a program for executing the method according to any one of claims 1 to 8 on a computer.

10. An apparatus for providing video-related advertisements, comprising:

a video search request reception unit for receiving a search request from an advertiser terminal;
a video list provision unit for providing a video search list corresponding to the search request to the advertiser terminal; and
an advertisement setting management unit for setting an advertisement for a first video, which is included in the provided video list, depending on advertisement setting information which is related to the first video and is obtained from the advertiser terminal, and setting an advertisement for a second video which shares an identical section with the first video, depending on the obtained advertisement setting information related to the first video.

FIG. 1

URL information

← → C ☆ | URL information

[ Title ]

video play area
( moving picture
playing area )

▯▷ ━━━━┃━━━━━

Banner type
Advertisement 1

Banner type
Advertisement 1

Text type Advertisement 1

[ Description ]
.......................................................
.......................................................
.......................................................
.......................................................
.......................................................

FIG. 2

FIG. 3

FIG. 4

320

video clustering system

| feature vector generation unit | 321 |

| identical section detection unit | 322 |

| video cluster management unit | 323 |

FIG. 5

330

advertising agency system

| video search request reception unit | 341 |

| video list provision unit | 342 |

| advertisement setting management unit | 343 |

FIG. 6

S410
RECEIVE SEARCH REQUEST
FROM ADVERTISER TERMINAL

S420
PROVIDE VIDEO SEARCH LIST

S430
OBTAIN ADVERTISEMENT
SETTING INFORMATION
RELATED TO FIRST VIDEO

S450
PERFORM VIDEO CLUSTERING
BASED ON VIDEO IDENTITY

S440
SET ADVERTISEMENT
FOR SECOND VIDEO SHARING
IDENTICAL SECTION WITH FIRST VIDEO

FIG. 7

```
┌────────────────────────────────────────────────┐
│         GENERATE FRAME FEATURE VECTORS          │── S510
│          OF FIRST AND SECOND VIDEOS             │
│   ┌──────────────────────────────────────┐      │
│   │   CALCULATE COLOR DISTRIBUTION VECTORS│── S511
│   │           OF SUB-FRAMES               │      │
│   └──────────────────────────────────────┘      │
│                      │                           │
│                      ▼                           │
│   ┌──────────────────────────────────────┐      │
│   │  NORMALIZE COLOR DISTRIBUTION VECTORS │── S512
│   └──────────────────────────────────────┘      │
│                      │                           │
│                      ▼                           │
│   ┌──────────────────────────────────────┐      │
│   │      CALCULATE FIRST DIFFERENCES      │── S513
│   │   FOR COLOR DISTRIBUTION VECTORS      │      │
│   └──────────────────────────────────────┘      │
│                      │                           │
│                      ▼                           │
│   ┌──────────────────────────────────────┐      │
│   │     CALCULATE SECOND DIFFERENCES      │── S514
│   │    FOR COLOR DISTRIBUTION VECTORS     │      │
│   └──────────────────────────────────────┘      │
│                      │                           │
│                      ▼                           │
│   ┌──────────────────────────────────────┐      │
│   │    GENERATE FEATURE VECTOR OF FRAME   │── S515
│   └──────────────────────────────────────┘      │
└────────────────────────────────────────────────┘
                       │
                       ▼
┌────────────────────────────────────────────────┐
│            DETECT IDENTICAL SECTION             │── S520
│         BETWEEN FIRST AND SECOND VIDEOS         │
│   ┌──────────────────────────────────────┐      │
│   │        COMPARE VIDEO SEGMENTS         │── S521
│   └──────────────────────────────────────┘      │
│                      │                           │
│                      ▼                           │
│   ┌──────────────────────────────────────┐      │
│   │      DETECT START/END POINTS          │── S522
│   │        OF IDENTICAL SECTION           │      │
│   └──────────────────────────────────────┘      │
└────────────────────────────────────────────────┘
                       │
                       ▼
┌────────────────────────────────────────────────┐
│        MANIPULATE CLUSTER IDENTIFIERS           │── S530
│          OF FIRST AND SECOND VIDEOS             │
└────────────────────────────────────────────────┘
```

FIG. 8

FIG. 9

FIG. 10

|  | R | G | B |
|---|---|---|---|
| $D_i(t)$ | 32 | 90 | 111 |
| $D_j(t)$ | 124 | 134 | 56 |
| $D_k(t)$ | 45 | 22 | 76 |
| ⋮ | | | |
| $D_l(t)$ | 52 | 34 | 201 |

| $E_{ij}(t)$ | -92 | -44 | 55 |
|---|---|---|---|
| $E_{ik}(t)$ | 79 | 112 | -20 |
| ⋮ | | | |
| $E_{kl}(t)$ | -7 | -12 | -125 |

$F(t) = \{111, -12, \cdots, 180\}$

| $A_{ijk}(t)$ | -85 | -32 | 180 |
|---|---|---|---|
| ⋮ | | | |
| $A_{jkk}(t)$ | 86 | 124 | 105 |

FIG. 11

FIRST VIDEO

SECOND VIDEO

## INTERNATIONAL SEARCH REPORT

| | |
|---|---|
| International application No. |
| **PCT/KR2009/001885** |

### A. CLASSIFICATION OF SUBJECT MATTER

***G06Q 30/00(2006.01)i***

According to International Patent Classification (IPC) or to both national classification and IPC

### B. FIELDS SEARCHED

Minimum documentation searched (classification system followed by classification symbols)
G06Q 30/00; G06Q 30/00E0; H04N 7/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: "advertisement, video, interval, setting, insertion, cluster, frame"

### C. DOCUMENTS CONSIDERED TO BE RELEVANT

| Category* | Citation of document, with indication, where appropriate, of the relevant passages | Relevant to claim No. |
|---|---|---|
| Y<br>A | KR 10-2002-0060824 A (NICT, INC.) 19 July 2002<br>See abstract, figures 1-6, claims 1-5 | 1,5,9-10<br>2-4,6-8 |
| Y<br>A | KR 10-2008-0053771 A (KANG, MIM SOO) 16 June 2008<br>See abstract, figures 1-27, claims 1-66 | 1,5,9-10<br>2-4,6-8 |
| A | KR 10-0876214 B1 (SK COMMUNICATIONS CORP.) 31 December 2008<br>See abstract, figures 1-7, claims 1-27 | 1-10 |
| A | KR 10-0707189 B1 (SAMSUNG ELECTRONICS CO., LTD.) 13 April 2007<br>See abstract, figures 1-20, claims 1-36 | 1-10 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 JANUARY 2010 (06.01.2010) | **07 JANUARY 2010 (07.01.2010)** |

| Name and mailing address of the ISA/<br>Korean Intellectual Property Office<br>Government Complex-Daejeon, 139 Seonsa-ro, Daejeon 302-701,<br>Republic of Korea<br>Facsimile No. 82-42-472-7140 | Authorized officer<br><br><br>Telephone No. |
|---|---|

Form PCT/ISA/210 (second sheet) (July 2008)

INTERNATIONAL SEARCH REPORT
Information on patent family members

International application No.

**PCT/KR2009/001885**

| Patent document cited in search report | Publication date | Patent family member(s) | Publication date |
|---|---|---|---|
| KR 10-2002-0060824 A | 19.07.2002 | NONE | |
| KR 10-2008-0053771 A | 16.06.2008 | NONE | |
| KR 10-0876214 B1 | 31.12.2008 | NONE | |
| KR 10-0707189 B1 | 13.04.2007 | US 2006-245724 A1 | 02.11.2006 |

Form PCT/ISA/210 (patent family annex) (July 2008)